# EUROPEAN PATENT APPLICATION

(11) **EP 1 232 971 A1**
(43) Date of publication of application: **21.08.2002**
(21) Application number: 01130844.2
(22) Date of filing: 27.12.2001
(51) Int. Cl.: B65G 47/90, B65H 31/30

(54) **Gripper device with anthropomorphous arms**

(30) Priority: 26.01.2001 IT MI010145
(71) Applicant: Castaldini Group S.r.l., 40050 Argelato (Bologna) (IT)
(72) Inventor: Galletti, Graziano, 41043 Formigine (Modena) (IT)
(74) Representative: Ripamonti, Enrico, Dr. Ing.

(57) **Abstract**

A gripper device for anthropomorphous arms, particularly for palletizing or generally transferring still to be opened cardboard boxes stacked in a pile (3), comprising a structure carrying relative movable gripping members (22; 13) which cooperate to grip and release the pile (3), wherein a first (13) of the gripping members constitutes a support for the pile (3), whereas a second (22) of the gripping members is movable vertically on command towards and away from the first (13) of said members, in order to clamp and respectively release the pile (3) (Figure 11).

## Description

The present invention relates to a gripper device for anthropomorphous arms, particularly for palletizing or generally transferring still to be opened cardboard boxes stacked in a pile (similar to square or rectangular prisms), of the type according to the introduction to the accompanying main claim.

The use of anthropomorphous arms provided with gripper devices for picking up and palletizing strapped piles of boxes is already known. The type of gripper device is such as to clamp or squeeze the pile at the centre of its sides. This lateral gripping, perfectly acceptable if applied to already formed boxes, bottles, bags and other articles to be palletized, has proved questionable and even damaging if applied to piles of boxes still to be opened. One of the main problems posed by these known devices is that not infrequently the consistency of the cardboard blank (of the box) and/or its shape do not allow reliable gripping of the pile, with consequent loss of cardboard blanks during the transfer operation by the anthropomorphous arm. Another problem arises when several adjacent piles are to be palletized; as a result of their thickness, the grippers necessarily create a space between one pile and the next (i.e. the piles do not lie against each other with effective mutual contact); the result is that pile instability problems arise during transport, and the resultant package is defective in appearance.

The main object of the present invention is to remedy the aforestated problems by a method for gripping still to be opened boxes (cardboard blanks) stacked in a pile, by means of a gripper device which implements this method, the inventive aspects of which are defined in the accompanying respective claims.

The invention will be more apparent from the ensuing detailed description of a preferred embodiment thereof, provided by way of non-limiting example and illustrated in the accompanying drawings, in which:
Figure 1 is a side view of the gripper device of the invention while gripping a pile of cardboard blanks (these representing boxes still to be opened) and connected to a partially reproduced conventional anthropomorphous arm by which the pile is transferred from a conveyor (for example a roller conveyor) to a pallet, to a transportable platform or to a suitable surface;
Figure 2 shows the object of Figure 1 from a different angle;
Figures from 3 to 6 schematically show a conventional gripper device intended to be mounted on an anthropomorphous arm and/or operating on the sides of a pile (see Figures 3, 4 and 6 in particular) and (see Figure 5) on an ideal group of side-by-side stacked piles;
Figure 7 is a schematic perspective view of the gripper device of the invention, with the omission of an important presser component which however is visible in other accompanying figures;
Figure 8 is a schematic perspective view of the gripper device while depositing the pile against a conventional fixed or fixable angular locator;
Figure 9 is a schematic perspective view of the gripper device while depositing a second pile to the side of the first;
Figure 10 is a perspective view of three piles of different cardboard blanks, on which the angles of the relative diagonals are shown;

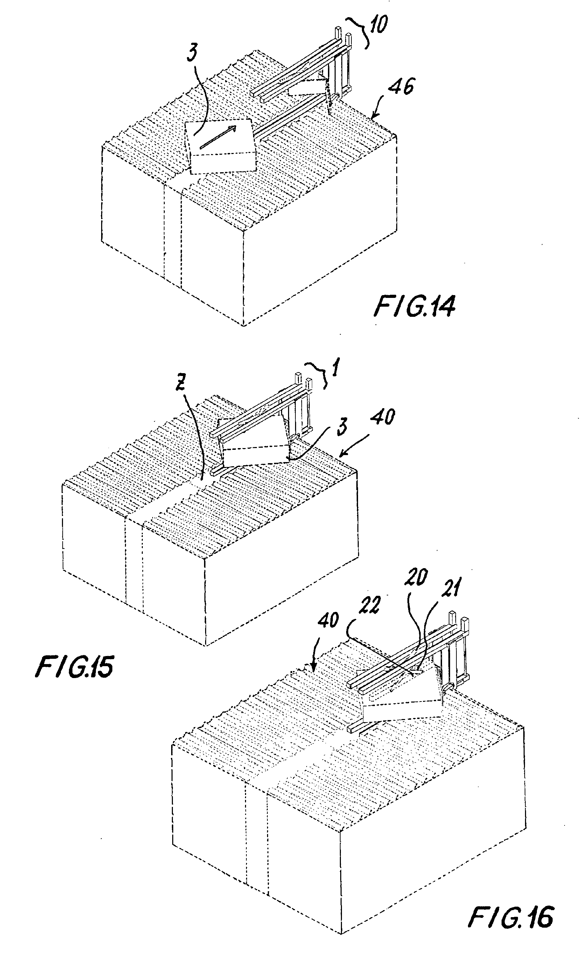

Figures 11, 12, 13, which are less schematic than Figures 7, 8 and 9, are perspective views of the gripper device of the invention showing one of its components, acting as an orientatable locator and thrust means, in three different operating conditions;
Figures from 14 to 16 are perspective views showing the take-up of a pile by a roller conveyor, and
Figures 17a, 17b and 18 are perspective views showing the transportation of two piles (successively) and their stacking.

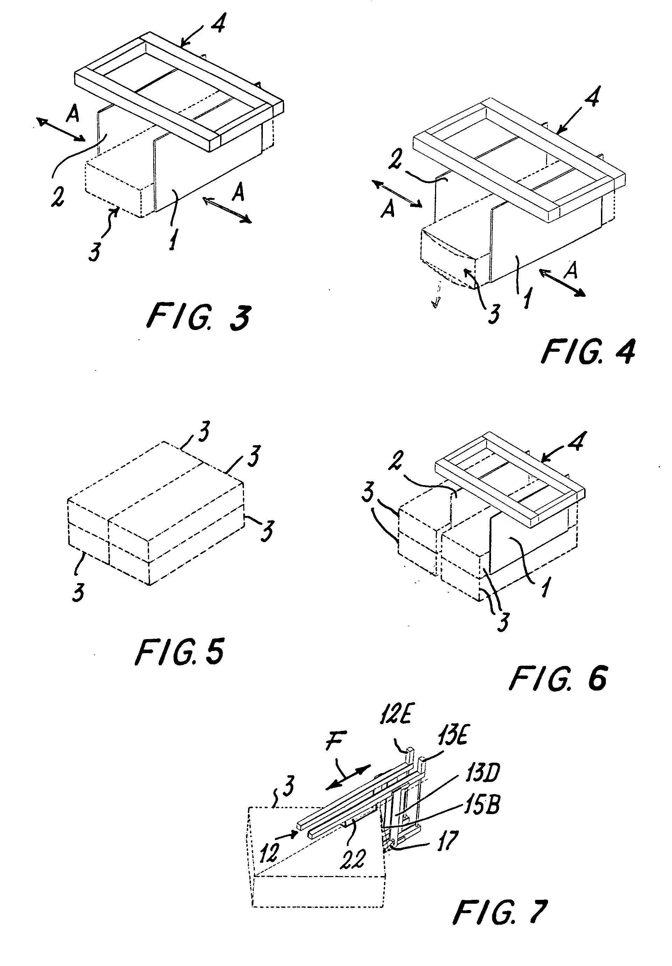

With initial reference to Figures 3, 4 and 6 all relative to a conventional gripper device, it can be seen that its two gripping members, indicated by 1 and 2, are movable in the direction A away from and towards a pile of cardboard blanks and are supported on the respective guide and operating means by a structural part 4 (here idealized as a frame) which is connected to a conventional anthropomorphous arm, not shown. In this known solution the gripping members 1 and 2 are applied, by clamping them together, onto the centre of the opposite sides of the pile.

However the consistency of the cardboard blank and its shape do not always ensure reliable gripping of the pile by the device, with consequent flexure and fall or loss of the pile during transportation, as shown in Figure 4.

When piles 3 stacked side-by-side (i.e. arranged in several layers) as shown in Figure 5 are to be palletized, the gripping members 1, 2 open in order to deposit the pile, but in so doing they create a space S between one pile and the next, with consequent stability problems during transportation on the pallet and poor appearance of any package formed by a plastic covering - for example by shrinkage or by plastic strapping - surrounding both the pallet and the various piles arranged on it.

The method of the invention consists of gripping the pile on its upper and lower sides along a diagonal of the pile. Although this is apparent by simply observing Figures 7, 8, 9 and 10, reference will be made several times hereinafter to this aspect.

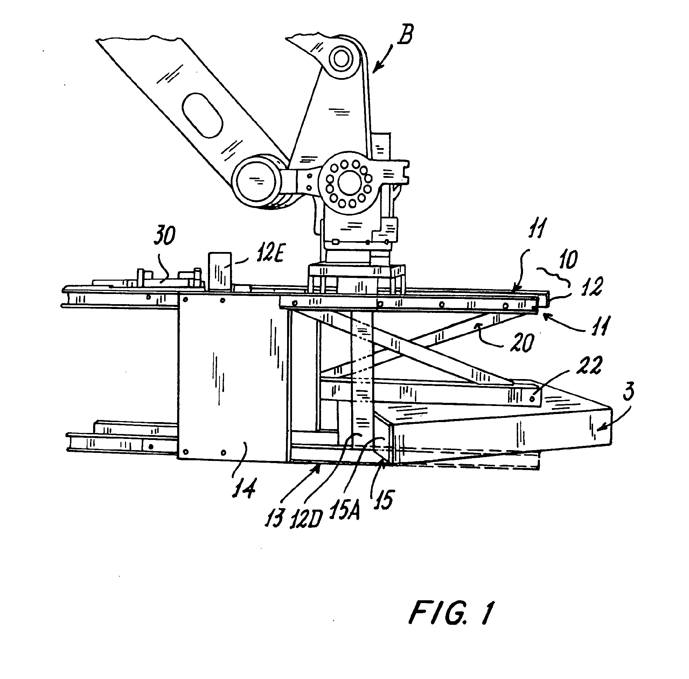

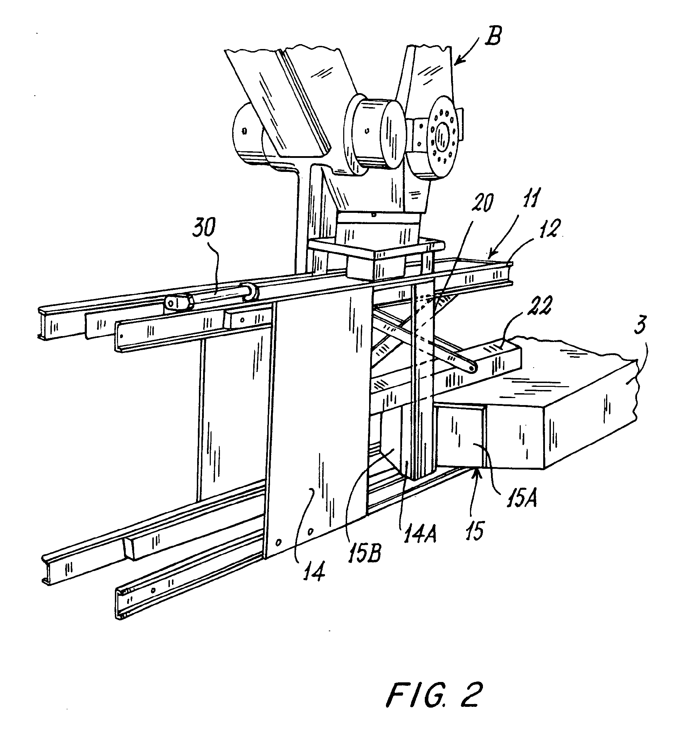

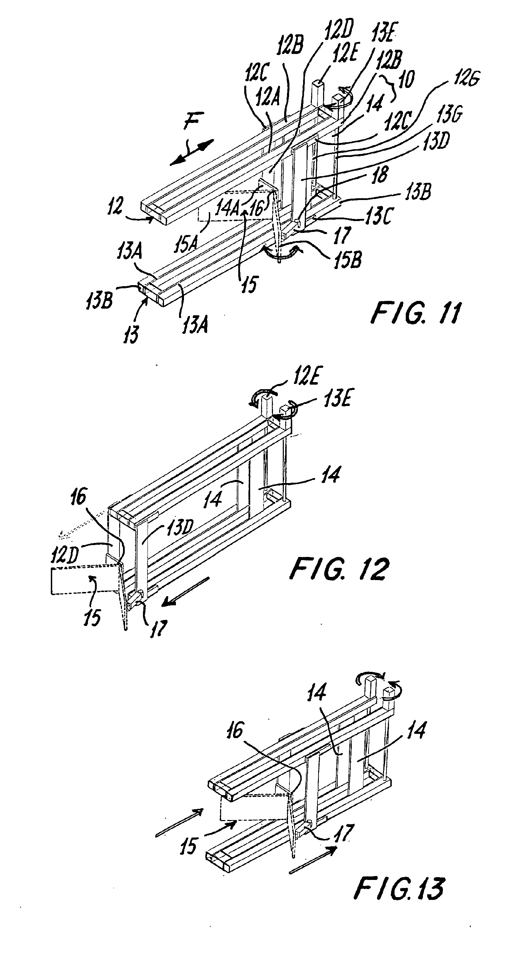

The gripper device of the invention, indicated overall by 10, is suitably connected in known manner to the end of a conventional anthropomorphous arm 3 (Figures 1, 2). In the example considered here, the gripper device presents a structure 11 formed from a pair of spaced-apart frames 12, 13 similar in shape to rectangles joined together by sidepieces 14. On the longitudinal sides 12A, 13A of the frames 12, 13, there are disposed linear guides 12B, 13B for the movement (in the direction F) of members 12C, 13C (such as slides, shoes and the like) connected together in pairs, on each side of the gripper device, by vertical plates 12D, 13D. To move each of the pairs of members 12C, 13C there are provided an electric motor means 12E, 13E, for example a stepping motor, and conventional transmission members (for example belts, bands, gearing including countershafts etc.) of which, for example, Figure 11 shows countershafts indicated by 12G and 13G.

Fixed to the plate 12D at a right angle there is a plate 14A to which there is hinged (on a vertical axis 16) an angular locator 15 presenting two flanges 15A, 15B at a right angle to each other. The flange 15 is connected to the plate 13D via an adjustable arm 17 and end hinges 18.

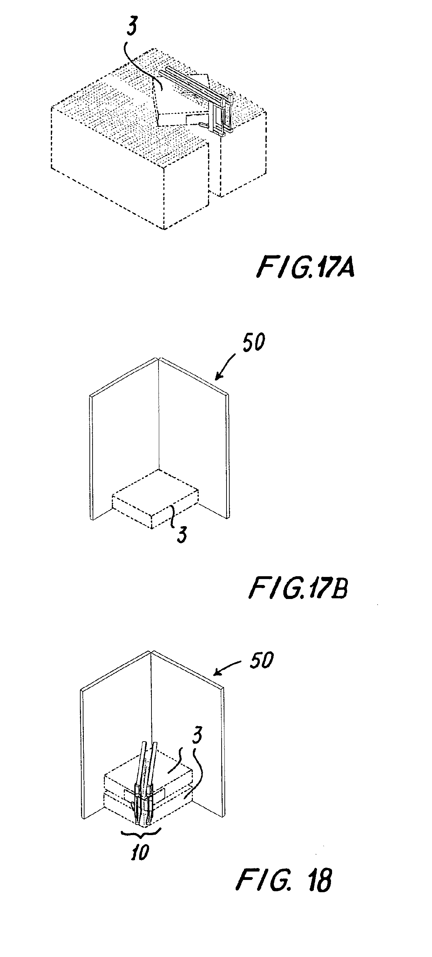

The upper frame 12 (see for example Figure 16) supports a controllable scissors structure 20 carrying at the lower end of its arms 21 a presser element 22 which with the lower frame 13 represents (see Figures 16, 17a in particular) the actual gripping part of the device of the invention. As can be seen, one of the upper ends of the arms 21 of the scissors is hinged between the sides of the upper frame 12, whereas the other is hinged to a slide slidingly mounted in linear guides and controlled by a pneumatic actuator 30. The linear guides are not shown because they are conventional and are connected to the inner sides of the upper frame, as can be seen.

The gripper device of the invention (see for example Figure 7) supports the pile 3 by its lower frame 13 (either directly or indirectly, for example via resting feet, idle rollers or the like present on said frame) and clamps it between this latter and the presser 22 along a "line" coinciding with the diagonal of the pile which when in this (gripping) position adheres, along one of its edges, against the flanges 15A, B of the angular thrusting locator 15 which is movable in the direction F to intervene in the discharge of the pile and halt the pile during its loading. The angular locator 15 is also able to adapt its angular position (relative to the longitudinal axis of the gripper device) in order to ensure that the device operates on the diagonals of the pile, whatever the angle which these form with the adjacent sides of the pile. The manner in which this adaptation takes place is clarified hereinafter.

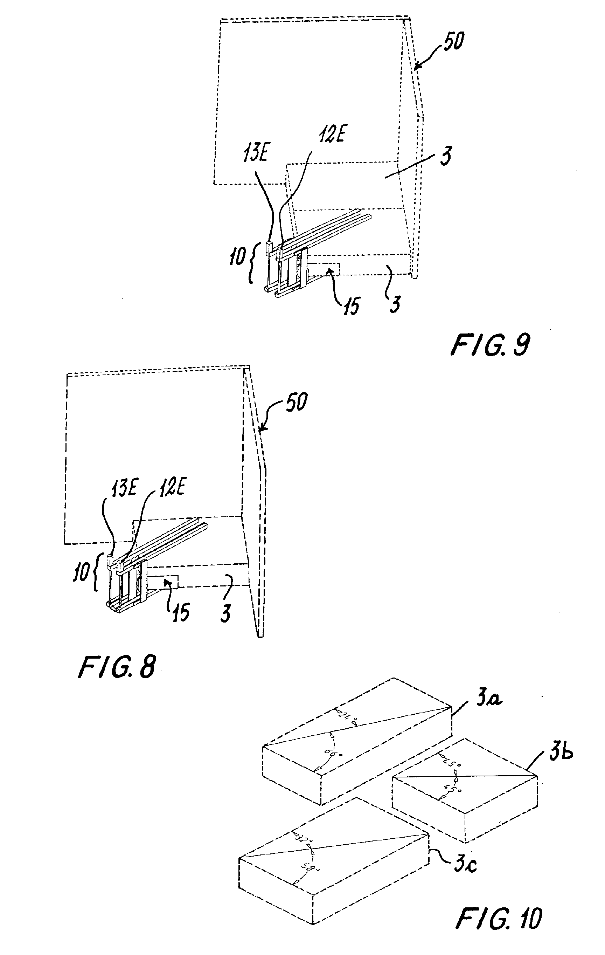

As can be seen from Figure 10, the piles indicated respectively by 3a, b and c present different diagonal angles depending on the ratio of the sides of the pile; in the case of a square (pile 3b) the two angles - which the diagonal forms with the adjacent sides - are each equal to 45°. The locator 15 is moved angularly by operating the motor 13E by the required amount, depending on the type of pile, while maintaining the other motor 12E at rest.

As can be seen from Figures 8 and 9, the gripper device of the invention enables the pile 3 to be deposited against a fixed or fixable angular stop 50, to achieve equalization and elimination of the spaces between piles (spaces indicated by S in Figure 4).

The particular type of grip against the diagonal results in prior orientation of the pile such that the pile diagonal falls at least approximately in the vertical longitudinal plane of the device of the invention.

The piles arrive at the gripper device of the invention rotated through an angle to their feed direction, i.e. at least in approximate alignment between the pile diagonal and the longitudinal plane of the gripper device. This rotation can be imparted by well known means, such as rotary or roller tables. If this alignment is inadequate the right angled locator completes it, the pile to be transferred being moved against the locator by a conveyor, for example a motorized roller conveyor 40, which advantageously possesses, as shown in Figures 14, 15, 16 and 17a, a space Z for the insertion into its interior of the gripper device of the invention so that the pile lies between the two frames 12 and 13.

When the pile 3 is in contact with the locator 15, the gripper device is raised by the anthropomorphous arm and the presser 22 is lowered pneumatically by the scissors which carry it, and is applied to the pile. The anthropomorphous arm then transfers the pile 3 in known manner, for example, to the angular stop 50 provided, against which it is discharged by the gripper device 1 with the intervention of the locator 15 acting as a thruster and driven by the two motors 12E and 13E operated simultaneously in synchronism.

The anthropomorphous arm then returns together with the gripper device into the position for receiving a second pile, which is then transferred to the stop 50, for example onto the previous pile (Figure 18).

By gripping along the diagonal there is the advantage of operating (in the case of corrugated cardboard) transversely both to the corrugations of the cardboard and to the seams, so best exploiting its strength.

Although a preferred embodiment has been described, it will be easy for an expert of the art on the basis of the inventive idea to devise numerous variants and modifications which however all be considered as lying within the scope of the invention, this scope being defined by the accompanying claims which are to be interpreted not in a restrictive literal sense but in terms of technical equivalents.

## Claims

1. A gripper device for anthropomorphous arms, particularly for palletizing or generally transferring still to be opened cardboard boxes stacked in a pile (3), comprising a structure carrying relative movable gripping members (22; 13) which cooperate to grip and release the pile (3), **characterised in that** a first (13) of the gripping members constitutes a support for the pile (3), whereas the second (22) of the gripping members is movable vertically on command towards and away from the first (13) of said members, in order to clamp and respectively release the pile (3).

2. A device as claimed in the preceding claim, wherein the second gripping member comprises a presser (22) carried by scissors (21) preferably operated pneumatically, said second member (22) being supported by a frame (12) forming part of the support structure of the device.

3. A device as claimed in claim 2, wherein the first gripping member (13) comprises a frame (13) forming part of the support structure, the two frames (12, 13) being mutually rigid (12D, 13D), substantially parallel and spaced apart.

4. A device as claimed in at least one of the preceding claims, wherein the two frames (12, 13) carry an angular locator (15) for the pile (3), said locator (15) being drivable in the two directions along the length of the frames (12, 13) and being rotatable on command about a vertical axis in order to adapt to the ratio of the sides of the pile (3).

5. A device as claimed in claim 5, wherein the two frames (12, 13) present rectilinear guides (12A, 12B) associated with their longitudinal sides and within which slidable means (12C, 13C) move, the slidable means (12C, 13C) of corresponding sides of the frames being connected together by connection elements (12D, 13D) and being driven by their own motor (12E, 13E), said two motors being independently operable, one of said connection elements (12D) being used to rotatably support the angular locator (15) whereas the other (13D) is linked (17) to one of the sides (15B) of the locator (15).

6. A device as claimed in claim 4, wherein the locator (15) defines with its sides (15A, 15B) a dihedral of 90°.

7. An arrangement for transporting piles of cardboard box blanks to the gripper device claimed in one or more of the preceding claims, **characterised by** comprising known devices for orientating the pile (3) such that it reaches the gripper device with one of its diagonals at least approximately coinciding with the central longitudinal plane of the gripper device.

8. An arrangement as claimed in claim 7 wherein for the pre-orientated piles (3) there is provided a feeder (40) presenting a longitudinal interruption (Z) for access of the gripper (1).

9. The method for manipulating piles (3) of cardboard box blanks implementable by the gripper device claimed in one or more of claims from 1 to 6 and possibly with the arrangements claimed in one or both of claims 7 and 8, wherein the pile (3) is gripped diagonally along the lower and upper sides of the pile.
